# EUROPEAN PATENT SPECIFICATION

(11) **EP 2 532 510 B1**
(45) Date of publication and mention of the grant of the patent: **16.11.2016**
(21) Application number: 11168880.0
(22) Date of filing: 07.06.2011
(51) Int. Cl.: B29C 70/74, F03D 1/06

(54) **Method of modifying the surface shape of a wind turbine rotor blade**
Verfahren zur Modifizierung der Oberflächenform einer Windturbinendrehschaufel
Procédé de modification de la forme de surface d'une pale de rotor d'éolienne

(43) Date of publication of application: 12.12.2012
(73) Proprietor: Siemens Aktiengesellschaft, 80333 München (DE)
(72) Inventor: Stege, Jason, 7330 Brande (DK)

(56) References cited:
- EP-A1- 2 031 242
- US-A1- 2010 135 814

## Description

The present invention relates to a method of modifying the surface shape of a wind turbine rotor blade.

Modifications to surface shapes of wind turbine rotor blades are usually done to alter the aerodynamic properties of the blades. For example, US 7,914,259 B2 describes the use of vortex generators on wind turbine rotor blades. Such vortex generators can be used for counteracting flow separation and stall, and for noise reduction. The vortex generators described in US 7,914,259 B2 are attached to the wind turbine rotor blades by attachment means like screws, bolts, rivets, or by welding or gluing. Alternatively, the vortex generators are attached to the wind turbine blade as part of a string, a tape, a coil or a band that is attached to the blade by attachment means such as screws, bolts, rivets, or by welding or gluing. As another alternative, it is described in US 7,914,259 B2 that the vortex generator may be formed integrally with the wind turbine rotor blade. The same mentioned methods of fixing are known for other blade surface shape modifying elements like flaps, spoilers, etc.

US 2010/0135814 A1 and EP 2 031 242 A1 describe modifying wind turbine rotor blades by attaching sleeves or blade elements to wind turbine rotor blades.

With respect to this prior art it is an objective of the present invention to provide an advantageous method of modifying the surface shape of a wind turbine rotor blade.

This objective is solved by a method of modifying a surface shape of a wind turbine rotor blade according to claim 1.

In the inventive method of modifying the surface shape of a wind turbine rotor blade a shape modifying element like, for example, a winglet, a flap, a vortex generator, a spoiler, etc. is cast on the surface of the wind turbine rotor blade. Casting aerodynamic components directly on a turbine blade surface allows for seamlessly or at least almost seamlessly attaching a shape modifying element to the blade surface, which would otherwise only be possible by integrally forming the element with the wind turbine rotor blade. In particular, a seamless or almost seamless connection of a shape modifying element to the surface of the wind turbine rotor blade is difficult to achieve with a prefabricated element that is attached to the blade by means of screws, bolts, rivets, by means of welding, or even by means of gluing. In contrast thereto, directly casting on the surface allows for a seamless or almost seamless connection due to the fact that a liquid resin can fill tiny spaces between a mould and the surface before it is cured.

In particular, the shape modifying element is cast by use of a mould that is set on the surface of the wind turbine rotor blade. Such a mould comprises an inner mould surface the shape of which is defined according to the result of subtracting the unmodified surface shape of the wind turbine rotor blade from the desired modified surface shape. This kind of constructing the mould surface allows for an oplimized junction between the inner mould surface and the blade surface which helps to achieve a seamless or almost seamless attachment of the cast shape modifying element to the unmodified surface of the rotor blade. With the aid of such a mould the shape modifying element can be cast by introducing into the mould a liquid resin that shows adhesive properties with respect to the wind turbine rotor blade surface material, and then curing the introduced resin.

When casting the shape modifying element an insert may be located such in the mould as to allow the liquid resin to flow around the insert. The resin is cured with the insert remaining inside the resin. In particular, the insert may be stiff and/or made of a foam. Moreover, a preform could be used as insert. For example, a mould for a flap, fitted directly to the blade, can contain a stiff plastic insert that is encapsulated in a flexible resin such as silicone rubber injected into mould. The resulting casting will be stiff according to the insert, yet soft on the outside for safety concerns. However, the inside does not necessary need to have the shape of a flap. It could as well have the shape of a winglet, a vortex generator, a spoiler, etc. In case of a winglet, a preform may be made form a foam core packed with glass fibres which is placed on the blade tip. Then, for example a mould comprising two halves could define the new outside geometry of the blade surface and provide a tight seal with the blade during the casting process. However, at least small shape modifying elements could also be cast without the use of an insert just by giving the inner surface of the mould the appropriate shape.

Before introducing the liquid resin, a fibre material, in particular reinforcing fibres like glass fibres, carbon fibres, ceramic fibres, aramid fibres, etc., may be placed in the mould.

The inventive method allows for a wide range of material properties and reinforcement material. Furthermore, it allows for providing shape modifying elements with a wide range of possible shapes. All such elements can be attached afterwards to the original surface of a wind turbine rotor blade so that the method is suitable for retrofitting existing wind turbine rotor blades.

Further features, properties and advantages of the present invention will become clear from the following description of embodiments of the invention in conjunction with the accompanying drawings.
Figure 1 schematically shows casting a turbulator on the surface of a wind turbine rotor blade.
Figure 2 shows a detail of figure 1.
Figure 3 shows the finished turbulator.
Figure 4 shows casting a winglet at the tip of a wind turbine rotor blade.
Figure 5 shows a section of the unmodified blade surface.
Figure 6 shows the section of figure 5 with the modified surface shape.
Figure 7 shows a mould that is produced by subtracting the shape of figure 5 from the shape of figure 6.

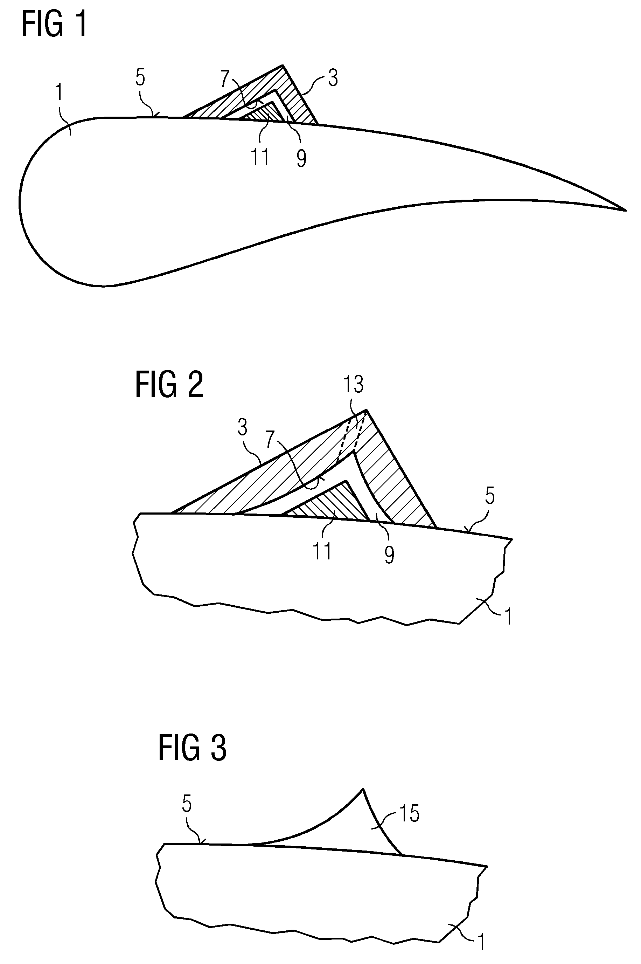

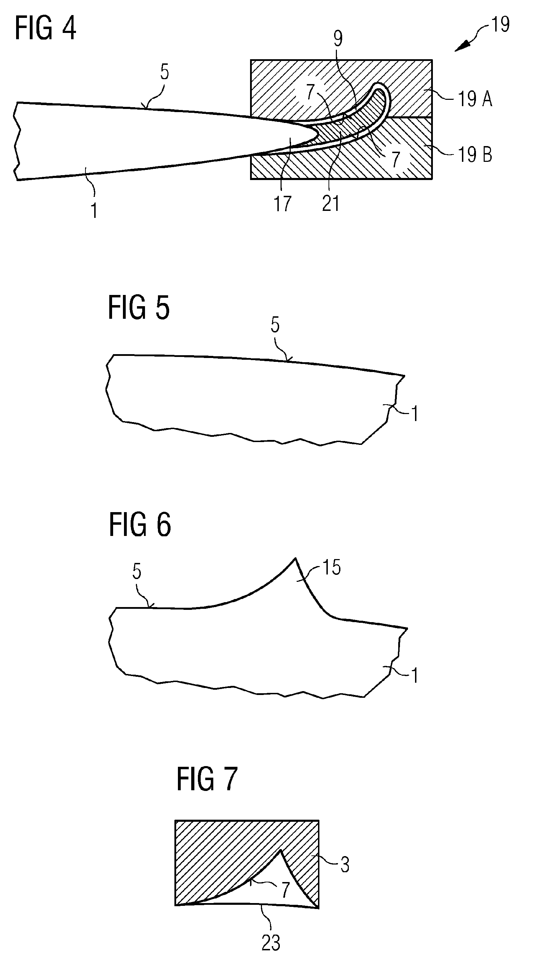

The inventive method will now be described with respect to figures 1 to 4, where figures 1 to 3 schematically show casting of a turbulator while figure 4 schematically shows casting of a winglet.

According to the inventive method, shape modifying elements like turbulators, flaps, spoilers, winglets, etc. are directly cast on the surface of a wind turbine rotor blade. Figure 1 schematically shows a wind turbine rotor blade 1 the surface of which is to be modified in a sectional view together with a mould 3 set on the unmodified surface 5 of the wind turbine rotor blade. In the present embodiment, the mould 3 is made of a single piece although a mould made of two or more pieces may also be used. An inner surface 7 of the mould 3 and the unmodified surface 5 of the blade 1 covered by the mould 3 together form an enclosed space 9 that defines the shape of a turbulator that is cast on the blade surface 5 as shape modifying element in the present embodiment.

Inside the enclosed space 9 a rigid insert 11 is placed on the unmodified blade surface 5. The insert 11 is placed such that it does not contact the inner surface 7 of the mould 3, i.e. such that a resin introduced into the enclosed space 9 can freely flow around the insert 11. The mould 3 and the insert 11 placed on the surface 5 of the wind turbine rotor blade 1 are shown in more detail in figure 2.

For casting the turbulator, i.e. for modifying the surface shape of the wind turbine rotor blade 1, a liquid resin is introduced into the space 9 through in inlet opening 13. Please note that the location of the inlet opening 13 shown in figure 2 is chosen in view of clarity of illustration and does not necessarily show the real location of the inlet opening. The actual location of the inlet opening 17 will be chosen in view of the shape modifying element to be produced and in view of a good distribution of resin throughout the mould 3. In addition, further openings could be present in order to simultaneously introduce resin at different locations of the mould 3 and/or to let air escape from the mould 3.

When the space 9 enclosed by the unmodified blade surface 5 and the inner surface 7 of the mould 3 is filled with liquid resin the resin is cured thereby forming the turbulator 15 that is shown in figure 3. Together with the remaining unmodified surface 5 of the blade 1 the surface of the turbulator 15 forms the modified surface shape of the blade.

The insert 11 used for casting the turbulator 15 may be any rigid structure like, a metal structure, a wood structure, a pre-cured fibre reinforced structure, a foam core, etc. The resin introduced into the enclosed space 9 is a resin that adheres to the surface 5 of the rotor blade 1. Which kind of resin will be used could be decided in view of the material properties of the wind turbine blade surface 5. In particular, the resin should show very good adhesive properties with the surface material. In particular, a resin could be used that is identical to the resin used when forming the wind turbine rotor blade itself. However, a resin different to the resin used in forming the rotor blade can be used as well. For example, in case of a rigid core 11, a silicon rubber could be used as resin which shows still some flexibility after curing while at the same time showing good adhesive properties with the materials the surfaces of wind turbine rotor blades are typically made of. After curing the silicon rubber forms a soft skin above the rigid core which may be advantageous in view of safety concerns. Irrespective of the kind of liquid resin that is introduced into the enclosed space 9 and irrespective of whether an insert or core 11 is located inside the enclosed space 9, reinforcing fibres could be filled into the enclosed space 9 before introducing the liquid resin. Typically, glass fibres, carbon fibres, aramid fibres, etc. could be used as reinforcing fibres. Casting a turbulator 15 on the surface 5 of the wind turbine rotor blade 1 has been described with respect to figures 1 to 3. However, other elements like, for example, flaps, spoilers, winglets, etc. could be cast on the blade surface 5 by use of the same method. For example, as shown in figure 4, a winglet could be cast on the surface 5 of the tip region 17 of the wind turbine rotor blade 1. For casting the winglet, a mould 19 is used that comprises two halves 19A and 19B in the depicted embodiment. Together with the unmodified surface 5 of the tip region 17 the inner surfaces 7 of the two halves 19A and 19B form an enclosed space 9 defining the shape of the winglet. An insert 21 is located in the enclosed space 9 by attaching it to the blade tip 17. In the present embodiment, the insert 21 is a preform made from a foam core packed with glass fibres. After the preform 21 is attached to the blade tip 17 the to halves 19A, 19B of the mould 19 are placed on the tip 17 and joined so as to encompass and seal the tip with leaving a space 9 between the inner surface 7 of the mould halves 19A, 19B and the insert 21. Then a liquid resin is introduced into the space 9 and cured to produce the winglet. What has been said with respect to the material of the insert 11 shown in figures 1 and 2 and with respect to the resin used for forming the turbulator 15 is also valid in case of the insert 21 and the resin used for forming the winglet.

Although only two exemplary shape modifying elements have been described with respect to figures 1 to 4 other large or small shape modifying elements can be cast in the same manner. Small or thin shape modifying elements such as, for example, vortex generators, can be cast with filters in the correct places to ensure that no air remains in the mould. The resulting casting would have almost no edge effect on the wind flowing across the blade.

The mould 3 that is used in the inventive method of modifying the surface shape of a wind turbine rotor blade can be produced by a subtraction of the unmodified surface shape of the rotor blade from the desired modified surface shape. This procedure will be described with respect to figures 5 to 7. Figure 5 schematically shows a section of the unmodified surface 5 of a wind turbine rotor blade 1 which shall be modified by casting a shape modifying element on it. The desired shape of the modified wind turbine rotor blade is shown in figure 6, which schematically shows a turbulator 15 as the shape modified element of the present embodiment. Both shapes can be present for example in form of CAD data. The shape of the inner surface 7 of the mould 3 is derived by subtracting the shape of the unmodified surface 5 from the shape of the modified surface that is shown in figure 6. The resulting difference defines the shape of the inner surface 7 of the mould 3, as it shown in figure 7. Furthermore, this method also allows for accurately adapting the rim of the mould 3 to the unmodified surfaces 5 of the wind turbine rotor blade 1. By this measures, very smooth transitions from the surface of the shape modifying element, i.e. the surface of the turbulator 15 in the present embodiment, to the surface 5 of the unmodified region of the wind turbine rotor blade can be achieved.

The mould shown in figure 7 only comprises a single part. However, moulds having two or more parts could be produced by the same process. Dividing the mould into parts could either be done after forming the mould by cutting the mould or by dividing the shape derived from subtracting the unmodified surface shape from the desired modified surface shape into sub-shapes and forming an individual mould part for each sub-shape. For example, the two halves 19A, 19B of the mould 19 shown in figure 4 could be produced independently based on two sub-shapes with the inner surface section of the mould halve 19A and the inner surface section of the mould halve 19B being defined by the sub-shapes. The abutting surfaces of the mould parts can be freely defined as long as they do not alter the shape of the inner surface 7 of the mould. In the alternative dividing procedure, the mould would be formed as a single part and cut in two halves afterwards.

The inventive method of modifying wind turbine rotor blades offers some advantages over the state of the art. For example, large composite moulds take quite sometime to make. Therefore, casting permanent modifications after the blade has been fabricated can save a significant investment in time and money. Moreover, retrofits are possible with the same process as used in a production environment. In addition, some shapes simply can't be cast in a large mould, such as a trailing edge that is covered by a silicon gurney flap to create a shaper edge. As a further advantage of the inventive method, casting directly on the surface creates a new shape with higher tolerances than the original casting without additional of finishing work. Furthermore, different resin/reinforcement systems can be used to create unique properties in the modified areas.

The invention has been described with respect to exemplary embodiments thereof as illustrative examples of the invention. However, please note that although special embodiments have been described to explain the invention deviations from these embodiments are possible. For example, although the embodiments describe a vortex generator and a winglet as shape modifying elements other shape modifying elements such as flaps, spoilers, etc. can also be cast by use of the inventive method. Hence, the scope of the invention shall not be limited by the described exemplary embodiments but only by the appended claims.

## Claims

1. A method of modifying the surface shape of a wind turbine rotor blade (1), in which a shape modifying element (15) is cast on the surface (5) of the wind turbine rotor blade (1), **characterised in that** the shape modifying element (15) is cast by use of a mould (3, 19) set on the surface (5) of the wind turbine rotor blade (1), where the mould (3, 19) comprises an inner mould surface (7) the shape of which is defined according to the result of subtracting the unmodified surface shape from the desired modified surface shape.

2. The method as claimed in claim 1,
**characterised in that**
the shape modifying element (15) is cast by introducing a liquid resin into the mould (3, 19) which shows adhesive properties with respect to the wind turbine blade surface material, and curing the resin.

3. The method as claimed in claim 2,
**characterised in that**
an insert (11, 21) is located such in the mould (3, 19) when casting the shape modifying element as to allow the liquid resin to flow around the insert (11, 21), and the resin is cured with the insert (11, 21) remaining inside the resin.

4. The method as claimed in claim 3,
**characterised in that**
the insert (11, 21) is stiff and/or made of a foam.

5. The method as claimed in claim 3 or claim 4, **characterised in that**
the insert (11, 21) has the shape of one of the following: a winglet, a flap, a vortex generator, a spoiler.

6. The method as claimed in any of the claims 3 to 5, **characterised in that**
a preform is used as insert (11, 21).

7. The method as claimed in any of the claims 2 to 6, **characterised in that**
a fibre material is placed in the mould (3, 19) before introducing the liquid resin.

## Patentansprüche

1. Verfahren zur Modifizierung der Oberflächenform eines Windenergieanlagen-Rotorblattes (1), wobei ein formmodifizierendes Element (15) auf der Oberfläche (5) des Windenergieanlagen-Rotorblattes (1) gegossen wird,
**dadurch gekennzeichnet, dass**
das formmodifizierende Element (15) unter Verwendung einer Gießform (3, 19) gegossen wird, die auf die Oberfläche (5) des Windenergieanlagen-Rotorblattes (1) aufgesetzt wird, wobei die Gießform (3, 19) eine innere Formoberfläche (7) umfasst, deren Form gemäß dem Ergebnis der Subtraktion der nicht modifizierten Oberflächenform von der gewünschten modifizierten Oberflächenform definiert ist.

2. Verfahren nach Anspruch 1,
**dadurch gekennzeichnet, dass**
das formmodifizierende Element (15) gegossen wird, indem ein flüssiges Harz in die Gießform (3, 19) eingeleitet wird, welches Hafteigenschaften in Bezug auf des Material der Oberfläche des Windenergieanlagen-Rotorblattes aufweist, und indem das Harz ausgehärtet wird.

3. Verfahren nach Anspruch 2,
**dadurch gekennzeichnet, dass**
ein Einsatz (11, 21) derart in der Gießform (3, 19) angeordnet wird, dass, wenn das formmodifizierende Element gegossen wird, es dem flüssigen Harz ermöglicht wird, um den Einsatz (11, 21) herumzufließen, und das Harz mit dem innerhalb des Harzes verbleibenden Einsatz (11, 21) ausgehärtet wird.

4. Verfahren nach Anspruch 3,
**dadurch gekennzeichnet, dass**
der Einsatz (11, 21) steif und/oder aus einem Schaumstoff hergestellt ist.

5. Verfahren nach Anspruch 3 oder Anspruch 4,
**dadurch gekennzeichnet, dass**
der Einsatz (11, 21) die Form eines der folgenden Elemente aufweist: eines Winglets, einer Klappe, eines Wirbelgenerators, eines Spoilers.

6. Verfahren nach einem der Ansprüche 3 bis 5,
**dadurch gekennzeichnet, dass**
eine Vorform als Einsatz (11, 21) verwendet wird.

7. Verfahren nach einem der Ansprüche 2 bis 6,
**dadurch gekennzeichnet, dass**
ein Fasermaterial in der Gießform (3, 19) angeordnet wird, bevor das flüssige Harz eingeleitet wird.

## Revendications

1. Procédé de modification de la forme de surface d'une pale (1) de rotor d'éolienne, dans lequel un élément (15) de modification de forme est coulé sur la surface (5) de la pale (1) de rotor d'éolienne,
**caractérisé en ce que**
l'élément (15) de modification de forme est coulé en utilisant un moule (3, 19) fixé sur la surface (5) de la pale (1) de rotor d'éolienne, où le moule (3, 19) comprend une surface intérieure (7) de moule dont la forme est définie selon le résultat de la soustraction de la forme de surface non modifiée de la forme de surface modifiée désirée.

2. Procédé selon la revendication 1,
**caractérisé en ce que**
l'élément (15) de modification de forme est coulé en introduisant une résine liquide dans le moule (3, 19) qui montre des propriétés adhésives par rapport au matériau de surface de pale d'éolienne, et en durcissant la résine.

3. Procédé selon la revendication 2,
**caractérisé en ce que**
un insert (11, 21) est situé dans le moule (3, 19) de manière à, lors de la coulée de l'élément de modification de forme, permettre que la résine liquide s'écoule autour de l'insert (11, 21), et la résine est durcie avec l'insert (11, 21) restant à l'intérieur de la résine.

4. Procédé selon la revendication 3,
**caractérisé en ce que**
l'insert (11, 21) est rigide et/ou constitué d'une mousse.

5. Procédé selon la revendication 3 ou la revendication 4, **caractérisé en ce que**
l'insert (11, 21) a la forme d'un parmi les suivants : une ailette, un volet, un générateur de tourbillon, un aileron.

6. Procédé selon l'une quelconque des revendications 3 à 5, **caractérisé en ce que**
une préforme est utilisée comme insert (11, 21).

7. Procédé selon l'une quelconque des revendications 2 à 6, **caractérisé en ce que**
un matériau fibreux est placé dans le moule (3, 19) avant l'introduction de la résine liquide.
